Europäisches Patentamt

European Patent Office

Office européen des brevets

(11) Veröffentlichungsnummer: **0 193 738**
**A2**

## (12) EUROPÄISCHE PATENTANMELDUNG

(21) Anmeldenummer: 86101329.0

(22) Anmeldetag: 01.02.86

(51) Int. Cl.⁴: **H04M 1/02**

(30) Priorität: 02.03.85 DE 3507483

(43) Veröffentlichungstag der Anmeldung:
**10.09.86 Patentblatt 86/37**

(84) Benannte Vertragsstaaten:
**AT BE IT**

(71) Anmelder: **Telefonbau und Normalzeit GmbH**
**Mainzer Landstrasse 128-146 Postfach 4432**
**D-6000 Frankfurt (Main)(DE)**

(72) Erfinder: **Cezanne, Lothar**
**Bahnstrasse 3a**
**D-6082 Mörfelden/Walldorf(DE)**
Erfinder: **Kretz, Hans-Joachim, Ing. grad.**
**Franz-Simon-Strasse 5**
**D-6230 Frankfurt 80(DE)**
Erfinder: **Markloff, Heinz**
**Wörsdorferstrasse 24**
**D-6000 Frankfurt 1(DE)**
Erfinder: **Zilias, Jürgen, Dipl.-Ing.**
**Am Wörsbach 11**
**D-6257 Hünfelden 2(DE)**

(54) **Endgerät einer Fernmeldevermittlungsanlage.**

㊼ In einem Endgerät einer Fernmeldevermittlungsanlage
bestehend aus einem Bedienungspult mit einer Eingabetastatur, einem separaten Gehäuse mit einer Anzeigevorrichtung,
beispielsweise Bildschirm und einer Hör-und Sprecheinrichtung ist der elektro-akustische Wandler einer
Lauthöreinrichtung und/oder Tonrufeinrichtung im Gehäuse
der Anzeigevorrichtung angebracht, wobei das Bedienungspult den Lautstärkeregler der Lauthöreinrichtung und/oder
Tonrufeinrichtung aufweist.

EP 0 193 738 A2

Endgerät einer Fernmeldevermittlungsanlage

Die Erfindung betrifft ein Endgerät einer Fernmeldevermittlungsanlage bestehend aus einem Bedienungspult mit einer Eingabetastatur, einem separatem Gehäuse mit einer Anzeigevorrichtung beispielsweise Bildschirm und einer am Bedienungspult oder an der Anzeigevorrichtung angeschlossenen Hör-und Sprecheinrichtung, wobei das Bedienungspult mit der Anzeigevorrichtung und der Fernmeldevermittlungsanlage elektrisch verbunden ist.

Ein derartiges Endgerät ist bereits bekannt. So wird in der Zeitschrift "Ericsson Review" Nr. 2, 1983 auf den Seiten 66 bis 72 der Vermittlungsplatz einer Fernsprechvermittlungsanlage beschrieben, welcher ein flaches Bedienpult mit einer Eingabetastatur, einer daran angeschlossen Hör- und Sprecheinrichtung und eine in einem getrennten Gehäuse untergebrachte Anzeigevorrichtung aufweist. Durch die räumliche Trennung von Bedienungspult und Anzeigevorrichtung besteht für die Bedienungsperson die Möglichkeit, die beiden genannten Einrichtungen derart anzuordnen, daß die Bedienung und Benutzung der Einrichtungen den persönlichen Wünschen angepaßt ist.

Derartige Endgeräte können jedoch nicht nur als Vermittlungsplätze sondern auch als Teilnehmerendgeräte eingesetzt werden. Die Aufgabe der Erfindung besteht nun darin, bei einem derartigen Endgerät eine aus Fernsprechapparaten bekannte Lauthöreinrichtung, Freisprecheinrichtung oder Tonrufeinrichtung einzusetzen.

Diese Aufgabe wird dadurch gelöst, daß der elektroakustische Wandler einer an sich bekannten Lauthöreinrichtung, Freisprecheinrichtung und/oder Tonrufeinrichtung im Gehäuse der Anzeigevorrichtung angebracht ist und das Bedienungspult den bzw. die Lautstärkeregler der Lauthöreinrichtung, Freisprecheinrichtung und/oder Tonrufeinrichtung aufweist.

Durch die Unterbringung des elektro-akustischen Wandlers im Gehäuse der Anzeigevorrichtung wird eine bessere akustische Abstrahlung erreicht, als dies bei einem Einbau in einem Bedienungspult der Fall wäre, insbesondere dann, wenn das Bedienungspult sehr flach ausgebildet ist. Der Lautstärkeregler verbleibt dabei im Bedienungspult, so daß dieser auch dann leicht erreichbar ist, wenn das Gehäuse mit der Anzeigevorrichtung außerhalb der normalen Reichweite der Bedienungsperson steht. Ist bei einer Freisprecheinrichtung das Mikrofon am Bedienungspult eingebaut, dann wird durch den Lautsprechereinbau in der Anzeigevorrichtung die akustische Rückkopplung leichter vermieden. Weitere Vorteile ergeben sich aus den Unteransprüchen.

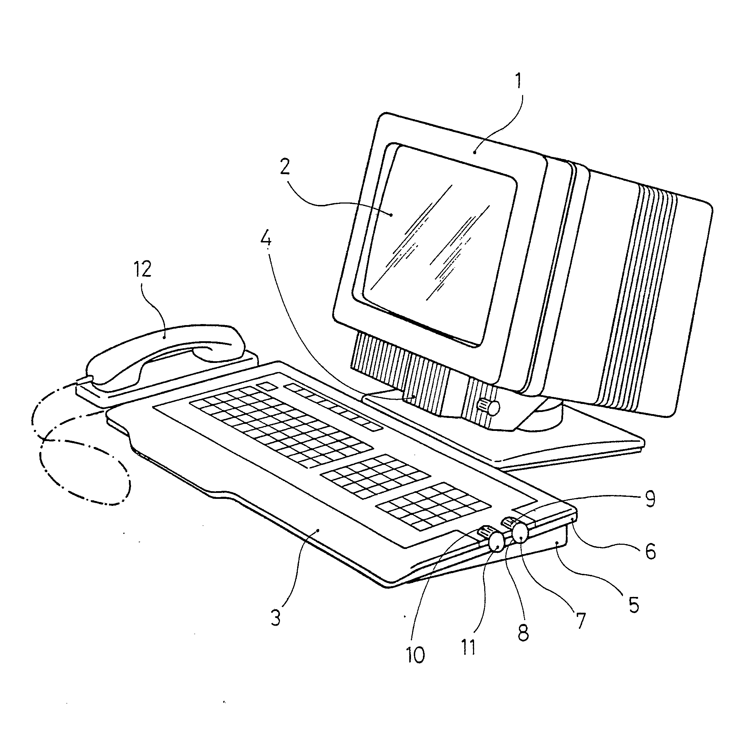

Die Erfindung wird anhand eines Ausführungsbeispiels näher erläutert, welches in der Zeichnung dargestellt ist.

Das Endgerät besteht aus einem Bedienungspult mit einer Eingabetastatur, einer Hör-und Sprecheinrichtung in Form eines Telefonhörers 12 und einer Anzeigeeinrichtung 2 die in einem spearaten Gehäuse 1 untergebracht ist. Der Telefon-handapparat 12 und die Anzeigeeinrichtung 2 sind elektrisch mit dem Bedienungspult 3 verbunden.

Der elektro-akustische Wandler 4 der Lauthör, Freisprech-bzw. Tonrufeinrichtung ist im Gehäuse 1 der Anzeigeeinrichtung 2 untergebracht. Das Bedienungspult 3 weist zwei Lautstärkeregler auf, von denen der eine (7) beispielsweise für die Lauthöreinrichtung und der andere - (11) für die Tonrufeinrichtung vorhanden ist. Die Oberseite 6 des Bedienungspults 3 ragt über das Unterteil 5 hinaus. In dieser Platte sind zylindrische Ausnehmungen 8 angebracht, in welchen die Drehknöpfe 7 und 11 drehbar sitzen. Der Durchmesser der Drehknöpfe 7 und 11 ist entweder gleich oder größer als die Dicke der Platte 6, so daß die Drehknöpfe nicht nur von der Oberseite des Bedienungspults sondern auch gleichzeitig von der Unterseite der Platte 6 faßbar sind.

Die Drehknöpfe 7 und 11 sind derart eingesetzt, daß sie mit der Außenkante der Platte 6 bündig sind, dabei ist die der Außenkante zugewandte Oberfläche der Drehknöpfe mit einer Rändelung 9 und die andere Seite mit einer Beschriftung 10 versehen.

Das Lauthör-, Freisprech-oder Tonrufsignal wird jeweils über ein elektronischen Stellglied geführt, dessen Ausgangssignal der Endstufe des in der Anzeigevorrichtung eingebauten elektroakustischen Wandlers zugeführt wird. Die Steuerung der elektronischen Stellglieder erfolgt jeweils mit Hilfe einer Gleichspannung, die durch ein Potentiometer einstellbar ist. Damit die Steuergleichspannung störsignalfrei gehalten werden kann, wird die den elektronischen Stellgliedern zugeführte Steuerspannung über ein entsprechendes Filter geführt. Das elektronische Stellglied, das Filter und die Enstufe können beispielsweise entweder in einem gesonderten Beikasten oder auch in der Anzeigevorrichtung selbst angebracht sein. Mit Hilfe der Steuergleichspannung wird in dem elektronischen Stellglied das Eingangssignal (Lauthör-, Freisprech-oder Tonruf-Signal) in seiner Amplitude verändert.

## Ansprüche

1. Endgerät einer Fernmeldevermittlungsanlage bestehend aus einem Bedienungspult mit einer Eingabetastatur, einem separaten Gehäuse mit einer Anzeigevorrichtung, beispielsweise Bildschirm und einer am Bedienungspult oder an der Anzeigeeinrichtung angeschlossenen Hör-und Sprecheinrichtung, wobei das Bedienungspult mit der Anzeigevorrichtung und der Fernmeldevermittlungsanlage elektrisch verbunden ist, dadurch gekennzeichnet, daß der elektro-akustische Wandler (4) einer an sich bekannten Lauthöreinrichtung Freisprecheinrichtung und/oder Tonrufeinrichtung im Gehäuse (1) der Anzeigevorrichtung (2) angebracht ist und das Bedienungspult (3) den bzw. die Lautstärkeregler der Lauthöreinrichtung Freisprecheinrichtung und/oder der Tonrufeinrichtung aufweist.

2. Endgerät nach Anspruch 1, dadurch gekennzeichnet, daß das Bedienungspult (3) an seiner Oberseite eine auf mindestens einer Seite das Unterteil (5) des Bedienungspultes (3) überragende Platte (6) aufweist, daß der Drehknopf (7,11) des Lautstärkereglers in eine Ausnehmung (8) der Platte (6) eingesetzt ist und daß dieser sowohl von der Oberseite als auch von der Unterseite der Platte (6) bedienbar ist.

3. Endgerät nach Anspruch 2, dadurch gekennzeichnet, daß die Ausnehmung (8) zylindrisch in Richtung der Drehachse des Drehknopfes (7,11) ausgebildet ist.

4. Endgerät nach einem der Ansprüche 2 oder 3, dadurch gekennzeichnet, daß die Ausnehmung (8) derart ausgebildet ist, daß der Drehknopf (7,11) mit der Außenkante der Platte (6) abschließt.

5. Endgerät nach einem der Ansprüche 2 oder 4, dadurch gekennzeichnet, daß der Drehknopf (7,11) auf seinem Umfang an der der Außenkante der Platte (6) zugewandten Seite eine Rändelung (9) und auf der der Platte zugewandten Seite eine Skala oder Beschriftung (10) aufweist.

6. Endgerät nach einem der Ansprüche 1 bis 5, dadurch gekennzeichnet, daß der Drehknopf (7,11) an der rechten Seite der Platte (6) angebracht ist.

7. Endgerät nach einem der Ansprüche 1 bis 6, dadurch gekennzeichnet, daß der Drehknopf (7,11) einen Durchmesser aufweist, der gleich oder größer als die Dicke der Platte (6) ist.

8. Schaltungsanordnung für ein Endgerät nach Anspruch 1, dadurch gekennzeichnet, daß durch den Lautstärkeregler eine Steuergleichspannung erzeugt wird, welche zur Einstellung eines der Endstufe des elektroakustischen Wandlers vorgeschalteten Stellgliedes dient.

9. Schaltungsanordnung nach Anspruch 8, dadurch gekennzeichnet, daß die Steuergleichspannung über ein dem Stellglied vorgeschaltetes Filter geführt wird.

TN P 3942